# EUROPÄISCHE PATENTSCHRIFT

(11) **EP 1 944 231 B1**
(45) Veröffentlichungstag und Bekanntmachung des Hinweises auf die Patenterteilung: **11.08.2010**
(21) Anmeldenummer: 07024357.1
(22) Anmeldetag: 15.12.2007
(51) Int. Cl.: B63B 17/00, F16F 15/02, B63B 3/70

(54) **Schaltschrank mit mindestens einem darin angeordneten Batterietrennschalter**
Control cabinet with at least one battery master switch arranged inside
Armoire électrique dotée d'au moins un sectionneur de batterie agencé à l'intérieur

(30) Priorität: 11.01.2007 DE 102007001656
(43) Veröffentlichungstag der Anmeldung: 16.07.2008
(73) Patentinhaber: Howaldtswerke-Deutsche Werft GmbH, 24143 Kiel (DE)
(72) Erfinder: Brockstedt, Ralf, 24632 Lentföhrden (DE)
(74) Vertreter: Vollmann, Heiko

(56) Entgegenhaltungen:
- DE-A1- 10 331 822
- DE-A1- 19 957 098
- DE-B3- 10 357 226
- GB-A- 2 094 448

## Beschreibung

Die Erfindung betrifft ein Unterseeboot gemäß den im Oberbegriff des mit den in Anspruchs 1 angegebenen Merkmalen.

In Stromkreisen, die an sehr leistungsstarken Batterien, z.B. Fahrbatterien von Unterseebooten, angeschlossen sind, sind typischerweise Trennschalter vorgesehen, welche die Stromkreise sowie daran angeschlossene elektrische Komponenten und die Batterie vor einer durch einen Kurzschluss hervorgerufenen Überstrombelastung schützen. Solche Schalter sind beispielsweise in DE 102 12 948 A1 sowie in DE 103 31 822 A1 beschrieben. In den Trennschaltern wird die Leitungsverbindung durch Trennung von dafür vorgesehenen Trennkontakten getrennt. Während der Trennung der Trennkontakte entsteht zwischen diesen wegen der an dem Trennschalter anliegenden hohen Last in der Regel ein Lichtbogen, der üblicherweise mit einem Druckluftstrahl ausgeblasen wird. Hierzu wird der Druckluftstrahl beispielsweise derart auf den Lichtbogen gerichtet, dass er den Lichtbogen im Wesentlichen quer zu seiner ursprünglichen Ausrichtung verformt und auf diese Weise die Lichtbogenlänge so weit verlängert, bis diese die ionisierbare Lichtbogenstrecke übersteigt und der Lichtbogen zusammenbricht bzw. erlischt. Dabei wird von dem Druckluftstrahl auch vom dem Lichtbogen abgeschmolzenes Material der Trennkontakte ausgeblasen.

Sowohl der Lichtbogen als auch das von dem Druckluftstrahl ausgeblasene geschmolzene Material der Trennkontakte stellen eine erhebliche Gefahrenquelle dar. Daher ist es üblich, Trennschalter der in Rede stehenden Art in geschlossenen Schaltschränken anzuordnen, um die Umgebung des Trennschalters vor dem Lichtbogen, der von dem Lichtbogen erzeugten Hitze sowie vor dem von dem Druckluftstrahl hervorgerufenen Materialauswurf zu schützen. Schaltschränke zur Kapselung elektrischer Bauteile sind z. B. aus DE 1 912 555 U sowie DE 42 01 296 A1 bekannt. DE 1 912 555 U beschreibt eine elektrische Verteilungsanlage, die aus aneinandergesetzten Gehäusen besteht, wobei zwischen den mit Öffnungen versehenen Seitenwänden der Gehäuse ringförmige Dichtungen vorgesehen sind, um die Gehäuse auch an ihren Stoßstellen abzudichten. Aus DE 42 01 296 A1 geht ein Schaltschrank hervor, bei dem äußere abdeckende Teile, wie Seitenwände, mit einem Haftsystem, das aus zwei aufeinanderlegbaren und an den zu verbindenden Bauteilen fest anzubringenden Bändern besteht, an dem Schrank befestigt sind.

Bei Unterseebooten ist es bekannt, die Schaltschränke mit den darin befindlichen Trennschaltern zum Trennen der elektrischen Leitungsverbindung zu den Fahrbatterien in einem Bereich zwischen einem begehbaren Deck und dem Druckkörper des Unterseeboots anzuordnen, wobei die Schaltschränke einerseits an dem Druckkörper und andererseits am Deck befestigt sind. Dies ermöglicht eine verhältnismäßig Platz sparende Anordnung des Schaltschranks. Bestrebungen, die Decks von Unterseebooten wie z. B. in DE 1 572 497 B an einer Kapselung einer Maschine, in DE 38 22 940 A1 an einer Befestigungseinrichtung für Deckenpaneele, in DE 24 25 419 A1 an einer Vorrichtung zur Bauteillagerung sowie in DE 39 08 577 A1 anhand eines Innenraums eines Unterseeboots beschrieben, schocksicher oder schallgedämpft, d. h. beweglich zu lagern, stehen allerdings der oben beschriebenen Befestigung des Schaltschranks zwischen dem Druckkörper des Unterseeboots und diesem Deck bislang entgegen.

Das Dokument DE 19 957 098, das als nächstliegender Stand der Technik angesehen wird, beschreibt eine Vorrichtung zur schocksicheren Haltung von Bauelementen an Bord von Schiffen.

Vor diesem Hintergrund ist es die Aufgabe der Erfindung, ein Unterseeboot mit einem Schaltschrank für mindestens einen Trennschalter zu schaffen, bei dem der Schaltschrank auch an einem schocksicher, d.h. beweglich gelagerten Teil des Unterseeboots sicher festlegbar ist.

Diese Aufgabe wird mit einem Unterseeboot mit den in Anspruch 1 angegebenen Merkmalen gelöst. Vorteilhafte Weiterbildungen der Erfindung ergeben sich aus den Unteransprüchen, der nachfolgenden Beschreibung sowie den Zeichnungen.

Die Erfindung sieht ein Unterseeboot mit einem Schaltschrank mit mindestens einem darin angeordneten Trennschalter, insbesondere zum Trennen einer elektrischen Leitungsverbindung zu einer Fahrbatterie eines Unterseeboots vor. Der Schaltschrank weist mindestens eine umlaufende flexible Fuge auf. Ein Teil des Schaltschranks ist mit dem Druckkörper und ein anderer Teil des Schaltschranks mit einem dazu beweglich gelagerten Teil des Unterseeboots verbunden, wobei die Schaltschrankteile durch die flexible Fuge miteinander verbunden sind.

Bei dem beweglich gelagerten Teil des Unterseeboots kann es sich zweckmäßigerweise um ein Deck des Unterseeboots handeln. Hierbei sieht eine bevorzugte Ausgestaltung des Unterseeboots vor, den Schaltschrank unterhalb eines schocksicher, d. h. flexibel gelagerten Decks in dem Raum zwischen dem Druckkörper des Unterseeboots und diesem Deck anzuordnen, wobei ein erstes Schaltschrankteil an dem Druckkörper und ein zweites Schaltschrankteil an der Unterseite des Decks hängend befestigt sein können. Aufgrund der erfindungsgemäßen Ausgestaltung des Schaltschranks mit der an dem Schaltschrank umlaufenden flexiblen Fuge können von einer Schockbelastung hervorgerufene Bewegungen des Decks zu keiner Beschädigung des Schaltschranks führen, da die an dem Schaltschrank ausgebildete Fuge Relativbewegungen der beiden im Wesentlichen starren Schaltschrankteile zueinander zulässt bzw. ausgleicht.

Der Schaltschrank bildet zweckmäßigerweise ein geschlossenes Gehäuse, in dem der zumindest eine darin befindliche Trennschalter vollständig eingekapselt ist. Derart ausgebildet stellt der Schaltschrank insbesondere dann, wenn der darin angeordnete Trennschalter zum Trennen einer Leitungsverbindung zu einer sehr leistungsstarken Batterie vorgesehen ist, sicher, dass beim Aktivieren des Trennschalters d.h. beim Trennen der Leitungsverbindung der dann entstehenden Lichtbogen, die von dem Lichtbogen erzeugte Hitze sowie ein etwaiger Materialauswurf abgeschmolzener Trennkontakte an ihrer weiteren Ausbreitung gehindert werden.

Die an dem Schaltschrank vorgesehene umlaufende flexible Fuge teilt diesen in zwei im Wesentlichen starre Schaltschrankteile, die mittels der Fuge flexibel miteinander verbunden sind. Die Fuge kann grundsätzlich an beliebiger Stelle des Schaltschranks angeordnet sein, solange sie um einen Bereich des Schaltschranks herum verläuft und diesen Bereich von dem übrigen Schaltschrank trennt. Auf diese Weise wird der Schaltschrank in zwei Schaltschrankteile aufgeteilt, die über die umlaufende flexible Fuge miteinander verbunden sind, sodass der eine Teil des Schaltschranks beispielsweise am Druckkörper und der andere beispielsweise an dem dazu beweglich gelagerten Deck angebracht werden kann. Da die beiden Schaltschrankteile über die flexible Fuge miteinander verbunden sind, ist der Schaltschrank einerseits geschlossen ausbildet, die dadurch verbundenen Schaltschrankteile können jedoch Relativbewegungen zueinander ausführen, wie sie typischerweise zwischen schockfest gelagertem Deck und dem Druckkörper eines Unterseeboots erfolgen.

Der Verlauf der Fuge ist grundsätzlich nicht festgelegt und nicht auf eine Ebene beschränkt. In einer bevorzugten Ausgestaltung erstreckt sich die Fuge allerdings umfänglich des Schaltschranks und schneidet den Schaltschrank vorzugsweise in einer Umfangsebene in zwei Schaltschrankteile.

Im Bereich der Fuge wird die Wandung des Schaltschranks von einem flexiblen, d.h. formveränderbaren und gegebenenfalls auch elastischen Material gebildet. Diese Ausgestaltung der Fuge gewährleistet, dass die von der Fuge voneinander getrennten, im Wesentlichen starren Schaltschrankteile unter Formänderung der Fuge relativ zueinander bewegbar sind. Der größtmögliche Bewegungsweg der Schaltschrankteile aufeinander zu wird hierbei durch die Fugenbreite festgelegt, die daher zweckmäßigerweise so breit gewählt ist, dass sie größer als der größte zu erwartende Bewegungsweg der Schaltschrankteile in Richtung der Fugenbreite ist. Insbesondere wenn die in dem Schaltschrank angeordneten Trennschalter beim Trennen einen Lichtbogen hervorrufen ist das die Fuge bildende Material zweckmäßigerweise in ausreichendem Maße mechanisch und thermisch belastbar ausgebildet, um dem Lichtbogen und einem eventuellen Auswurf geschmolzenen Materials standhalten zu können.

Die erfindungsgemäße Ausgestaltung des Schaltschranks erlaubt es in vorteilhafter Weise, die durch die Fuge bzw. die Fugen getrennten Schaltschrankteile an verschiedenen Orten der Umgebung des Schaltschranks zu befestigen, wobei die Position dieser Orte relativ zueinander veränderbar sein kann. So kann ein erstes starres Schaltschrankteil an einem ersten Befestigungsteil in der Umgebung des Schaltschranks, bei dem es sich z. B. um eine erste Wandung an dem Aufstellort des Schaltschrankes handeln kann, befestigt sein, während ein zweites starres Schaltschrankteil an einem zu dem ersten Befestigungsteil relativbeweglichen Teil des Unterseeboots angebunden sein kann. Die flexible Fuge zwischen den beiden Schaltschrankteilen ermöglicht hierbei eine Relativbewegung zwischen erstem und zweitem Befestigungsteil, ohne dass der Schaltschrank diese Bewegung blockieren würde oder der Schaltschrank aufgrund dieser Relativbewegung beschädigt oder zerstört würde.

Die an dem Schaltschrank ausgebildete zumindest eine Fuge ist bevorzugt textil ausgebildet. Hierbei ist unter einer textilen Ausbildung zu verstehen, dass die Fuge von einem flächigen, biegeschlaffen Material, welches aus Fasern oder Fäden mit geordneter oder ungeordneter Faser- bzw. Fadenausrichtung besteht, gebildet ist. Um dem Lichtbogen sowie dem ausgeblasenen Trennkontaktmaterial standhalten zu können, weist das für die Fuge verwendete textile Material eine ausreichend hohe mechanische sowie thermische Beständigkeit auf.

Insbesondere bei nicht elastischer, beispielsweise textiler Ausbildung der Fuge ist in weiterer vorteilhafter Ausgestaltung des erfindungsgemäßen Schaltschranks vorgesehen, dass das die Fuge bildende Material derart dimensioniert ist, dass es in Einbaulage senkrecht zur Richtung der Fugenbreite zumindest eine Falte wirft. Das heißt, die Breite des Materials, welches die Fuge bildet, ist in Richtung des Abstandes der beiden starren Schaltschrankteile zueinander größer als dieser Abstand der starren Schaltschrankteile in Einbaulage und unbewegtem Zustand, so dass die Fuge faltenbalgähnlich einen Wulst bildet. Diese Weiterbildung ermöglicht es, die starren Schaltschrankteile in verhältnismäßig geringem Abstand zueinander anzuordnen, wobei der Abstand der beiden Schaltschrankteile lediglich von dem größten zu erwartenden Bewegungsweg der Schaltschrankteile aufeinander zu bestimmt wird. Gleichzeitig sind bei dieser Ausgestaltung aber verhältnismäßig große Bewegungswege bei entgegengesetzt gerichteten Bewegungen der starren Schaltschrankteile, d. h. bei einem Auseinanderbewegen der Schaltschrankteile, möglich. Des Weiteren erlaubt diese Ausgestaltung auch eine Relativbewegung der Schaltschrankteile in jeglicher Richtung quer zur Fugenbreite.

Die Fuge wird bevorzugt von mindestens einer Glasfasermatte gebildet. Neben der erforderlichen Flexibilität weisen Glasfasermatten die in diesem Zusammenhang ebenfalls nötige hohe Zugfestigkeit und thermische Beständigkeit sowie ein ausreichend großes Wärmeisoliervermögen auf, so dass die aus einer Glasfasermatte gebildete Fuge gegebenenfalls einen an dem Batterietrennschalter auftretenden Lichtbogen, die damit verbundene Hitze sowie einen Auswurf geschmolzenen Trennkontaktmaterials aufhalten kann. Grundsätzlich kann die Glasfasermatte sowohl als Vlies als auch als Gewebe ausgebildet sein. Bevorzugt ist die Glasfasermatte allerdings als Gewebe ausgebildet.

In weiterer vorteilhafter Ausgestaltung des erfindungsgemäßen Schaltschranks wird neben der Fuge auch mindestens eine Seitenwandung des Schaltschranks von einer Glasfasermatte gebildet. Hierbei ist es insbesondere vorgesehen, dass die dem Trennschalter in Ausblasrichtung gegenüberliegende Wandung des Schaltschranks von einer Glasfasermatte gebildet wird. So kann eine Glasfasermatte den gesamten Bereich des Schaltschranks verschließen, in den der Lichtbogen und das von den Trennkontakten des Trennschalters abgeschmolzene Material ausgeblasen werden.

Zweckmäßigerweise ist diese Glasfasermatte zumindest im lichtbogenbeaufschlagten Bereich nahtfrei ausgebildet, da es sich gezeigt hat, dass Glasfasermatten, die einem Lichtbogen und/oder verflüssigtem Material der Trennkontakte ansonsten erfolgreich standhalten, an Nahtstellen zu einem Durchbrennen neigen. Unter lichtbogenbeaufschlagtem Bereich ist der Bereich des Schaltschrankes zu verstehen, der beim Ausblasen des Lichtbogens in Ausblasrichtung liegt, d.h. der von aufgeschmolzenem Material beaufschlagt werden kann.

Zweckmäßigerweise sind die Glasfasermatten, die die Fugen sowie ggf. Wandungen des erfindungsgemäßen Schaltschranks bilden, mehrlagig ausgebildet sind. Die Anzahl der Glasfaserlagen ist hierbei grundsätzlich beliebig. Bevorzugt sind in Ausblasrichtung des Lichtbogens drei hintereinander liegende Glasfasermatten angeordnet bzw. die Glasfasermatte weist in Ausblasrichtung drei hintereinander angeordnete Glasfaserlagen auf. Durch die hiermit einhergehende Redundanz wird die Sicherheit des Schaltschranks erheblich vergrößert und die Umgebung des Schaltschranks zuverlässig vor dem Lichtbogen und der damit eingehenden Hitze sowie dem Kupferauswurf geschützt.

Insbesondere dann, wenn der erfindungsgemäße Schaltschrank in Unterseebooten eingesetzt wird, weist die Glasfasermatte an der Seite, die eine Außenseite des Schaltschranks bildet, vorteilhafterweise eine wasserundurchlässige Beschichtung vorzugsweise eine Silikonbeschichtung auf. Diese Silikonbeschichtung dient dazu, das Innere des Schaltschranks und insbesondere die dort angeordneten elektrischen Geräte bzw. elektrischen Kontakte vor Wasser, z. B. Spritzwasser zu schützen. Bei mehrlagig aufgebauten Glasfasermatten weist zweckmäßigerweise die eine äußere Mantelfläche des Schaltschranks bildende äußere Glasfaserlage an ihrer Außenseite eine wasserundurchlässige Beschichtung auf.

Vor dem bzw. den in dem erfindungsgemäßen Schaltschrank angeordneten Trennschaltern sind vorzugsweise Mittel zum Führen eines Lichtbogens angeordnet. So kann an den Trennschaltern jeweils eine Drucklufteinrichtung vorgesehen sein, die mittels einer Düse einen zwischen den in der Trennstellung befindlichen Trennkontakten des Trennschalters brennenden Lichtbogen in eine bestimmte Richtung ausbläst. Hierzu ist die Düse bevorzugt so ausgerichtet, dass der an ihr ausströmende Druckluftstrahl im Wesentlichen normal auf den Lichtbogen trifft und den Lichtbogen quer zu seiner ursprünglichen Ausrichtung verformt und auf diese Weise so weit verlängert, dass er aufgrund mangelnder lonisierbarkeit der Lichtbogenstrecke zusammenbricht und erlischt.

Um den Lichtbogen und das von den Trennkontakten abgeschmolzenes Material während des Ausblasens des Lichtbogens gezielt gegen eine dafür vorgesehenen Wandung des Schaltschranks z. B. gegen eine von einer Glasfasermatte gebildete Wandung leiten zu können, ist als weiteres Mittel zum Führen des Lichtbogens ein hohler Führungskörper vorgesehen. Dieser Führungskörper ist in Ausblasrichtung hinter den Trennkontakten angeordnet und bildet einen Führungskanal für den Lichtbogen und das ausgeblasene Trennschaltermaterial.

Nachfolgend ist die Erfindung anhand eines in der Zeichnung dargestellten Ausführungsbeispiels näher erläutert. In den Figuren zeigen:
- Fig. 1: eine Prinzipskizze des erfindungsgemäßen Unterseeboots mit einem darin angeordneten erfindungsgemäßen Schaltschrank und
- Fig. 2: eine teilweise geschnittene und auseinander gezogene perspektivische Ansicht des erfindungsgemäßen Schaltschranks.

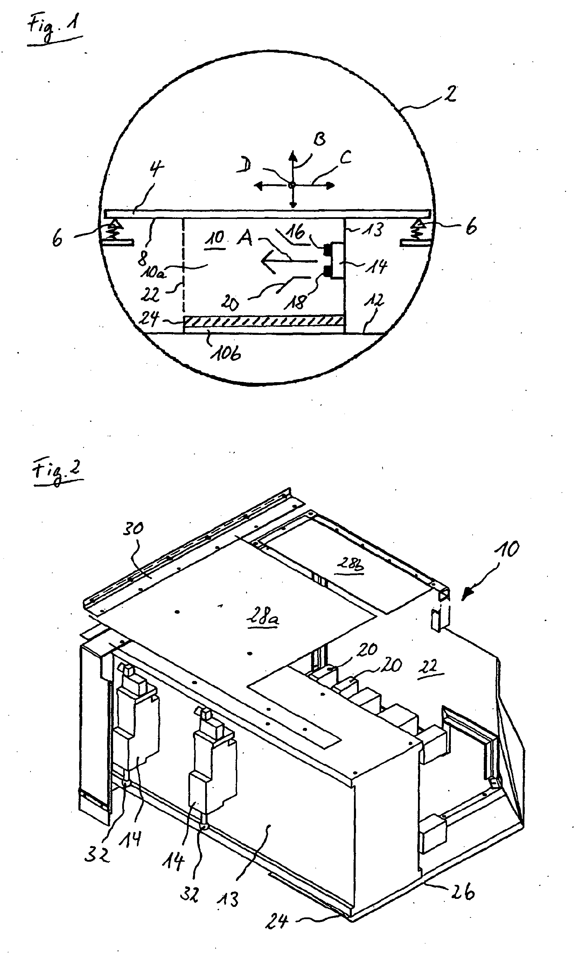

In einer skizzierten Querschnittsansicht ist in Fig. 1 der prinzipielle Aufbau eines Unterseebootes gemäß der Erfindung dargestellt. Das dort gezeigte Unterseeboot weist einen Druckkörper 2 auf, in dem ein begehbares Deck 4 auf Dämpfungselementen 6 schocksicher elastisch beweglich gelagert ist. An der Unterseite 8 des Decks 4 ist ein Schaltschrank 10 an seiner Oberseite hängend befestigt. Daneben ist der Schaltschrank 10 an seiner Unterseite an einem weiteren Deck 12 befestigt. Das Deck 12 ist starr an dem Druckkörper 2 des Unterseebootes angebunden, so dass der Schaltschrank 10 an seiner Unterseite über das Deck 12 ebenfalls starr mit dem Druckkörper 2 des Unterseebootes verbunden ist.

In dem Schaltschrank 10 sind an einer Seitenwand 13 Trennschalter 14 einer in Fig. 1 nicht dargestellten Fahrbatterie des Unterseebootes angeordnet. Mittels dieser Trennschalter 14 werden im Kurzschlussfall des Stromnetzes die an diesen Batterien angeschlossenen Stromkreise getrennt, um die Stromkreise und die daran angeschlossenen elektrischen Komponenten des Unterseebootes sowie die Fahrbatterie vor einem Kurzschluss zu schützen. Hierzu weisen die Trennschalter 14 einen ersten Trennkontakt 16 und einen zweiten Trennkontakt 18 auf. Beide Trennkontakte 16 und 18 sind aus Kupfer oder einer Kupferlegierung ausgebildet. Während des normalen Betriebs der Fahrbatterien liegen die Trennkontakte 16 und 18 aneinander an und schließen die an den Fahrbatterien angeschlossenen Stromkreise.

Im Versagensfall einer Fahrbatterie trennt der Trennschalter 14 durch Federkraft die elektrische Leitungsverbindung zu der Fahrbatterie, indem die beiden Trennkontakte 16 und 18 voneinander weg bewegt werden. Fig. 1 zeigt den Trennschalter 14 in diesem Zustand mit voneinander getrennten Trennkontakten.

Sobald die Trennkontakte 16 und 18 voneinander getrennt werden zündet zwischen diesen ein Lichtbogen. Um den Lichtbogen zu löschen, ist in dem Schaltschrank 10 eine in den Figuren nicht dargestellte Drucklufteinrichtung vorgesehen, mit welcher ein Druckluftstrahl quer zur Längsausdehnung des Lichtbogens in der in Fig. 1 mit A bezeichneten Richtung auf den Lichtbogen gerichtet wird. Durch die Beaufschlagung mit diesem Druckluftstrahl verformt sich der Lichtbogen und beult sich in Richtung A aus, wodurch sich der Lichtbogen soweit verlängert, bis er aufgrund mangelnder lonisierbarkeit der Lichtbogenstrecke zusammenfällt und erlischt. Wegen der hohen Lichtbogentemperaturen schmelzen die Trennkontakte 16 und 18 zumindest teilweise ab, wobei das so verflüssigte Kupfer von dem von der Drucklufteinrichtung erzeugten Druckluftstrahl ebenfalls in Richtung A ausgeblasen wird.

Um den Lichtbogen sowie das abgeschmolzene Kupfer kontrolliert in einen dafür vorgesehenen Bereich des Schaltschrankes 10 leiten zu können, ist in dem Schaltschrank 10 in Richtung A hinter dem Trennschalter 14 ein hohler Führungskörper 20 vorgesehen. Sowohl der Lichtbogen als auch das ausgeblasene Kupfer werden in dem Führungskörper 20 kanalisiert gegen eine in Fig. 1 gestrichelt dargestellt Seitenwand 22 des Schaltschrankes 10 geleitet. In dem Schaltschrank 10 ist die Seitenwand 22 der Seitenwand 13, an welcher die Trennschalter 14 angeordnet sind, in Richtung A gegenüberliegend angeordnet.

Auf diese Seitenwand 22 treffen der zwischen den Trennkontakten 16 und 18 brennende Lichtbogen, sofern er nicht vorher erloschen ist, sowie das von der Drucklufteinrichtung ausgeblasene Kupfer.

Die Seitenwand 22 ist dafür vorgesehen, den Lichtbogen sowie den Kupferauswurf aufzufangen. Um der damit verbundenen thermischen Belastung standhalten zu können, ist die Seitenwand 22 von einer Glasfasermatte gebildet, die an ihrer Außenseite eine Silikonbeschichtung aufweist, die das Eindringen von Wasser in den Schaltschrank 10 verhindern soll.

Wie bereits beschrieben, ist das Deck 4, an dessen Unterseite der Schaltschrank 10 hängend befestigt ist, elastisch auf Dämpfungselementen 6 gelagert. Im Fall einer Schockbelastung erlauben die Dämpfungselemente 6 eine Bewegung sowohl in eine Bewegungsrichtung B normal zur Oberfläche des Decks 4 als auch in Bewegungsrichtungen C und D in der Oberflächenebene des Decks 4.

Um diese Bewegungen überhaupt zu ermöglichen bzw. um den Schaltschrank 10, der sowohl an dem bewegbaren Deck 4 als auch an dem starren Deck 12 festgelegt ist, bei diesen Bewegungen nicht zu beschädigen, ist an dem Schaltschrank 10 eine flexible Fuge 24 vorgesehen. Diese Fuge 24 erstreckt sich umlaufend in einer zu den Decks 4 und 12 parallelen Ebene um den gesamten Umfang des Schaltschranks 10. Wie die Seitenwand 22 des Schaltschranks 10 ist auch die Fuge 24 textil in Form einer Glasfasermatte ausgebildet und damit formänderbar.

Die Fuge 24 teilt den Schaltschrank 10 in ein erstes Schaltschrankteil 10a und ein zweites Schaltschrankteil 10b. Abgesehen von der von einer Glasfasermatte gebildeten ungeteilten Seitenwand 22 sind die übrigen Seitenwände des Schaltschranks 10 z.B. dessen Seitenwand 13 von Blechen gebildet. Dementsprechend sind die Schaltschrankteile 10a und 10b im Wesentlichen als starr anzusehen. Bei einer durch eine Schockbeanspruchung hervorgerufenen Bewegung des Decks 4 ermöglicht die Fuge 24 eine Relativbewegung des starr an dem Deck 4 angebrachten Schaltschrankteils 10b gegenüber dem Schaltschrankteil 10a, das über das Deck12 starr mit dem Druckkörper 2 des Unterseebootes verbunden ist.

Der in Fig. 1 im eingebauten Zustand in dem erfindungsgemäßen Unterseeboot gezeigte Schaltschrank 10 ist detaillierter in Fig. 2 dargestellt. In dieser Figur ist der Schaltschrank 10 perspektivisch in einer Draufsicht gezeigt, wobei zur besseren Verdeutlichung Teile der Wandung des Schaltschranks weggelassen oder abgehoben worden sind.

Der Schaltschrank 10 weist eine im Wesentlichen rechteckige Form auf, wobei allerdings eine Ecke abgeschrägt ist. An eine Bodenplatte 26 des Schaltschranks 10 schließt sich direkt die von einer Glasfasermatte gebildete flexible Fuge 24 an, gefolgt von den Seitenwänden des Schaltschranks, darunter die Seitenwand 13 mit zwei daran angeordneten Trennschaltern 14 sowie die Seitenwand 22, von der der Lichtbogen und die ausgeblasenen Kupferteile der Kupferkontakte 16 und 18 des Batterietrennschalters 14 aufgehalten werden. Das Dach des Schaltschrankes 10 bilden mehrere Abdeckplatten, von denen Fig. 2 die Abdeckplatten 28a und 28b zeigt. Oberhalb der Abdeckplatten 28a und 28b ist eine abgewinkelte Befestigungsleiste 30 angebracht, die zur Befestigung des Schaltschranks 10 an der Unterseite des in Fig. 1 dargestellten Decks 4 dient.

Die von einem Blech gebildete Seitenwand 13 weist zwei Durchbrechungen auf, durch die zwei Trennschalter 14 der Fahrbatterien des Unterseeboots derart geführt sind, dass sich die die eigentliche Sicherung der Fahrbatterien bildenden Trennkontakte 16 und 18 (in Fig. 2 nicht sichtbar) im Inneren des Schaltschrankes 10 befinden, während der Bedienbereich der Trennschalter 14 außerhalb des Schaltschrankes 10 angeordnet ist. So ist in diesem außerhalb des Schaltschrankes liegenden Bereich der jeweiligen Trennschalter 14 ein Bedienhebel 32 vorgesehen, mittels derer die Kupferkontakte 16 und 18 für den normalen Batteriebetrieb federvorgespannt in eine einander kontaktierende Stellung bewegt und gehalten werden können.

### Bezugszeichenliste

- 2: Druckkörper
- 4: Deck
- 6: Dämpfungselement
- 8: Unterseite
- 10: Schaltschrank
- 10a, 10b: Schaltschrankteil
- 12: Deck
- 14: Trennschalter
- 13: Seitenwand
- 16: Trennkontakt
- 18: Trennkontakt
- 20: Führungskörper
- 22: Seitenwand
- 24: Fuge
- 26: Bodenplatte
- 28a, 28b: Abdeckplatte
- 30: Befestigungsleiste
- 32: Bedienhebel

- A: Richtung
- B: Bewegungsrichtung
- C: Bewegungsrichtung
- D: Bewegungsrichtung

## Patentansprüche

1. Unterseeboot mit einem Schaltschrank (10) mit mindestens einem in dem Schaltschrank (10) angeordneten Trennschalter (14), insbesondere zum Trennen einer elektrischen Leitungsverbindung zu einer Fahrbatterie des Unterseebootes, wobei der Schaltschrank (10) mindestens eine umlaufende flexible Fuge (24) aufweist, **dadurch gekennzeichnet, dass** ein Teil des Schaltschranks (10) mit dem Druckkörper (2) und ein anderer Teil des Schaltschrankes mit einem dazu beweglich gelagerten Teil des Unterseeboots verbunden ist, wobei die Schaltschrankteile durch die flexible Fuge miteinander verbunden sind.

2. Unterseeboot nach Anspruch 1, **dadurch gekennzeichnet, dass** der beweglich gelagerte Teil des Unterseeboots ein Deck ist.

3. Unterseeboot nach einem der vorangehenden Ansprüche, **dadurch gekennzeichnet, dass** sich die die Fuge (24) umfänglich des Schaltschranks (10) erstreckt.

4. Unterseeboot nach einem der vorangehenden Ansprüche, **dadurch gekennzeichnet, dass** die Fuge (24) textil ausgebildet ist.

5. Unterseeboot nach einem der vorangehenden Ansprüche, **dadurch gekennzeichnet, dass** das die Fuge (24) bildende Material derart dimensioniert ist, dass es in Einbaulage senkrecht zur Richtung der Fugenbreite eine Falte wirft.

6. Unterseeboot nach einem der vorangehenden Ansprüche, **dadurch gekennzeichnet, dass** die Fuge (24) von mindestens einer Glasfasermatte gebildet wird.

7. Unterseeboot nach einem der vorangehenden Ansprüche, **dadurch gekennzeichnet, dass** mindestens eine Seitenwandung (22) des Schaltschrankes (10) von einer Glasfasermatte gebildet wird.

8. Unterseeboot nach Anspruch 7, **dadurch gekennzeichnet, dass** die Glasfasermatte zumindest im lichtbogenbeaufschlagbaren Bereich nahtfrei ausgebildet ist.

9. Unterseeboot nach einem der Ansprüche 6 bits 8, **dadurch gekennzeichnet, dass** die Glasfasermatte mehrlagig aufgebaut ist.

10. Unterseeboot nach einem der Ansprüche 6 bis 9, **dadurch gekennzeichnet, dass** die Glasfasermatte an ihrer die Außenseite des Schaltschranks (10) bildenden Seite eine wasserundurchlässige Beschichtung, vorzugsweise eine Silikonbeschichtung aufweist.

11. Unterseeboot nach einem der vorangehenden Ansprüche, **dadurch gekennzeichnet, dass** an dem Trennschalter (14) Mittel (20) zum Führen eines Lichtbogens angeordnet sind.

## Claims

1. A submarine with a switch cabinet (10) with at least one disconnecting switch (14) arranged in the switch cabinet (10), in particular for disconnecting an electric lead connection to a propulsion battery of the submarine, wherein the switch cabinet (10) comprises at least one peripheral, flexible joint (24), **characterised in that** a part of the switch cabinet (10) is connected to the pressure hull (2) and another part of the switch cabinet is connected to a part of the submarine, which is movably mounted thereto, wherein the switch cabinet parts are connected to one another by way of the flexible joint.

2. A submarine according to claim 1, **characterised in that** the movably mounted part of the submarine is a deck.

3. A submarine according to one of the preceding claims, **characterised in that** the joint (24) extends peripherally of the switch cabinet (10).

4. A submarine according to one of the preceding claims, **characterised in that** the joint (24) is designed in a textile manner.

5. A submarine according to one of the preceding claims, **characterised in that** the material forming the joint (24) is dimensioned in a manner such that in the installed condition it forms a crease perpendicularly to the direction of the joint width.

6. A submarine according to one of the preceding claims, **characterised in that** the joint (24) is formed by at least one glass fibre mat.

7. A submarine according to one of the preceding claims, **characterised in that** at least one side wall (22) of the switch cabinet (10) is formed by a glass fibre mat.

8. A submarine according to claim 7, **characterised in that** the glass fibre mat is designed in a seamless manner at least in the region which may be hit by the electric arc.

9. A submarine according to one of the claims 6 to 8, **characterised in that** the glass fiber mat is constructed in a multi-layered manner.

10. A submarine according to one of the claims 6 to 9, **characterised in that** the glass fibre mat at its side forming the outer side of the switch cabinet (10), has a water-impermeable coating, preferably a silicone coating.

11. A submarine according to one of the preceding claims, **characterised in that** means (20) for guiding an electric arc are arranged on the disconnecting switch (14).

## Revendications

1. Sous-marin comprenant une armoire électrique (10) dotée d'au moins un sectionneur (14) disposé dans l'armoire électrique (10), en particulier pour isoler une connexion électrique à une batterie du sous-marin, l'armoire électrique (10) présentant au moins un joint flexible périphérique (24), **caractérisé en ce qu'**une partie de l'armoire électrique (10) est reliée à la coque pressurisée (2) et une autre partie de l'armoire électrique est reliée à une partie du sous-marin montée de façon réciproquement mobile, les parties de l'armoire électrique étant reliées entre elles par le joint flexible.

2. Sous-marin selon la revendication 1, **caractérisé en ce que** la partie montée mobile du sous-marin est un pont.

3. Sous-marin selon l'une des revendications précédentes, **caractérisé en ce que** le joint (24) s'étend sur la périphérie de l'armoire électrique (10).

4. Sous-marin selon l'une des revendications précédentes, **caractérisé en ce que** le joint (24) est réalisé en textile.

5. Sous-marin selon l'une des revendications précédentes, **caractérisé en ce que** le matériau formant le joint (24) est dimensionné de manière à former un pli, en position montée, perpendiculairement à la direction de la largeur du joint.

6. Sous-marin selon l'une des revendications précédentes, **caractérisé en ce que** le joint (24) est formé d'au moins une natte en fibres de verre.

7. Sous-marin selon l'une des revendications précédentes, **caractérisé en ce qu'**au moins une paroi latérale (22) de l'armoire électrique (10) est formée d'une natte en fibres de verre.

8. Sous-marin selon la revendication 7, **caractérisé en ce que** la natte en fibres de verre est réalisée sans couture au moins dans la région susceptible de recevoir un arc électrique.

9. Sous-marin selon l'une des revendications 6 à 8, **caractérisé en ce que** la natte en fibres de verre présente une structure multicouches.

10. Sous-marin selon l'une des revendications 6 à 9, **caractérisé en ce que** la natte en fibres de verre présente, sur son côté formant la face extérieure de l'armoire électrique (10), un revêtement imperméable à l'eau, de préférence un revêtement en silicone.

11. Sous-marin selon l'une des revendications précédentes, **caractérisé en ce que** sont disposés sur le sectionneur (14) des moyens (20) pour guider un arc électrique.
